# DEMANDE DE BREVET EUROPEEN

(11) **EP 2 048 421 A1**
(43) Date de publication de la demande: **15.04.2009**
(21) Numéro de dépôt: 07301448.2
(22) Date de dépôt: 10.10.2007
(51) Int. Cl.: F16L 7/02, F16L 21/00, F16L 27/107

(54) **Procédé de réalisation d'un manchon et manchon ainsi réalisé, notamment pour des véhicules**

(71) Demandeur: Acaplast, 23210 Benevent L'Abbaye (FR)
(72) Inventeur: Raynaud, Jacques, 23290, SAINT-ETIENNE-DE-FURSAC (FR)
(74) Mandataire: Fantin, Laurent

(57) **Abrégé**

L'objet de l'invention est un procédé de réalisation d'un manchon (10) de liaison, pour les liaisons de fluides, notamment utilisé dans le domaine des véhicules et plus particulièrement entre un moteur et un turbocompresseur et/ou entre un moteur et un refroidisseur ou encore entre une canalisation de réservoir et un réservoir de carburant.

Le manchon comprend une chaussette (12) et une enveloppe (14) tubulaire.

L'invention couvre aussi le manchon ainsi obtenu.

## Description

La présente invention concerne un procédé de réalisation d'un manchon de liaison utilisé dans le domaine des véhicules et plus particulièrement pour les liaisons de fluides sous pression et à haute température entre un moteur et un turbocompresseur et/ou un moteur et un refroidisseur ou pour les liaisons tubulure de réservoir/réservoir.

L'invention couvre aussi le manchon ainsi réalisé.

On sait par exemple que dans le domaine des moteurs à explosions internes équipant les véhicules se déplaçant sur terre, sur mer et dans les airs, il est prévu des équipements permettant d'améliorer les performances du type turbocompresseur et il est nécessaire de prévoir un refroidisseur pour dissiper les calories générées.

Un turbocompresseur utilise les gaz d'échappement issus de la combustion pour assurer une compression du mélange gazeux d'admission pour suralimenter ledit moteur en air donc en oxygène. Compte tenu que cette technique permet de récupérer une partie de l'énergie perdue à l'échappement et donc d'améliorer le rendement, cet agencement est très répandu.

Les données sont claires et déterminées pour ce type d'application:
- les températures des fluides transportés sont de l'ordre de 180 °C à 200°C, et
- les pressions varient de 1 à 2,5 bars absolus, la pression maximale de résistance étant de 4,5 bars pour donner un ordre d'idée.

De même, des manchons sont utilisés pour faire circuler des fluides du moteur vers un refroidisseur et du refroidisseur vers le moteur, quel que soit le sens de circulation. Les températures sont inférieures mais néanmoins autour de 150°C. Un autre exemple est aussi la liaison entre une tubulure de réservoir et le réservoir d'un véhicule. Dans ce cas, ce ne sont pas des problèmes de température et de pression qui se posent mais des problèmes d'allongement ou de compression en cas de choc. En effet, le réservoir est métallique ou en matériau composite et le conduit d'alimentation est également métallique ou composite. Il faut donc interposer un manchon de connexion assurant la l'allongement qui peut être de plusieurs dizaines de millimètres. Or de tels manchons doivent assurer la déformation, résister mécaniquement mais aussi chimiquement aux carburants. Les matériaux connus et référencés comme aptes à venir au contact de tels carburants sont peu nombreux, spécifiques et chers et ne présentent pas les qualités requises de résistance mécanique.

Donc, de tels manchons ne peuvent être remplacés par des tubulures rigides car les organes qu'ils relient, ont des mouvements relatifs de déplacement.

Le moteur qui porte le turbocompresseur est monté sur le châssis avec interposition de silentblocs de sorte à supprimer la transmission des vibrations générées par le moteur notamment et le refroidisseur est lui aussi monté sur des amortisseurs et indépendant du bloc moteur avec son turbocompresseur.

Il convient donc de prévoir des liaisons présentant une certaine flexibilité selon les trois axes, voire un allongement possible.

On connaît dans le domaine automobile des manchons visant à répondre à certaines des problématiques exposées. Ces manchons sont réalisés à partir de silicone à l'intérieur duquel est noyée une armature, notamment une armature textile. Par le passé, les sorties des turbocompresseurs / refroidisseurs étaient disposées de telle sorte qu'elles nécessitaient des conduits tortueux. De fait le silicone armé répondait bien à ce besoin. Par contre, une telle composition présentait le gros inconvénient d'une faible résistance aux hydrocarbures, ce qui provoquait un vieillissement accéléré avec un gonflement du silicone nécessitant un remplacement régulier, encore plus souvent lorsqu'il s'agit d'un conduit d'alimentation de réservoir. De plus, cette dégradation provoquait aussi des désengagements intempestifs du manchon hors de l'extrémité tubulaire sur laquelle il était monté malgré la présence de colliers, ce qui s'avèrerait inconcevable pour l'application à un réservoir.

Une solution a consisté à recourir aux élastomères fluorés qui sont imperméables aux hydrocarbures mais la fabrication nécessite d'utiliser le procédé de banderolage qui est coûteux en main d'oeuvre. Quant au coating interne, le résultat n'est pas fiable du moins pas suffisamment durable pour ce domaine d'application aux moteurs de véhicules.

Si on recourt à la fabrication par moulage de conduits de forme complexe, il faut prévoir des ondes pour absorber les débattements et la seule technique est un moulage à noyau fusible, donc également chère.

On connaît une demande internationale de brevet N° WO 03/104702 qui présente un tube rigide externe réalisé par banderolage et un tube interne réalisé à partir d'un matériau tissé flexible. Le tube interne est rendu imperméable par un revêtement externe d'un polymère tel que du polyester.

Cet agencement permet de faire circuler un fluide sous haute pression dans le tube interne, la reprise de la pression radiale étant obtenue par le tube externe. Cette technique nécessite un banderolage d'où des conduits d'une très grande raideur.

On connaît aussi le brevet japonais JP 07 083360 qui décrit un tube souple en caoutchouc autour duquel est réalisé un enroulement hélicoïdal de renfort.

Un tel agencement présente un inconvénient lorsqu'il est sectionné aux extrémités et il faut prévoir de noyer l'enroulement dans une matrice résine ou élastomère.

Les agencements des organes de certains moteurs ont été revus et les conduits tortueux ont été supprimés, dans ce cas, au profit de conduits droits, ce qui diminue les pertes de charge et simplifie l'architecture moteur.

L'art antérieur relevé ne propose pas de solution pour réaliser un manchon de façon simple, économique, résistant à la chaleur et/ou à la pression, apte à absorber des dilatations, imperméable et résistant aux hydrocarbures et aux fluides caloporteurs glycoliques dans les moteurs de véhicules et suffisamment souple pour compenser les débattements lors du fonctionnement du moteur ou offrir une dilatation mécanique en cas de choc du véhicule qui en est équipé.

A cet effet, selon l'invention, le procédé de réalisation d'un manchon de liaison d'organes d'un véhicule, notamment utilisé dans le domaine de véhicules pour une liaison entre un moteur et un turbocompresseur et/ou un moteur et un refroidisseur, quel qu'en soit le sens, ou une tubulure de réservoir et un réservoir, se caractérise en ce qu'il comprend les étapes suivantes :
- préparer une chaussette d'une longueur I, à partir d'un matériau résistant au moins mécaniquement,
- introduire dans ladite chaussette une enveloppe tubulaire souple en un matériau résistant à la chaleur et/ou au froid et aux hydrocarbures, ladite enveloppe étant sous forme pliée par rapport à son axe longitudinal, d'une longueur L supérieure à I de sorte à ménager une portion débordante d'enveloppe de chaque côté de cette chaussette, cette portion ayant une longueur X = (L-I)/2 et
- laisser l'enveloppe reprendre sa forme tubulaire initiale, les diamètres intérieur de la chaussette et extérieur de l'enveloppe en forme étant sensiblement identiques de sorte que la surface extérieure de l'enveloppe vienne au contact de la surface intérieure de la chaussette.

L'invention couvre aussi le manchon obtenu par la mise en oeuvre de ce procédé, manchon qui se caractérise en ce qu'il comprend:
- une chaussette d'une longueur I, réalisée à partir d'un matériau apte à résister mécaniquement, et
- une enveloppe tubulaire souple en un matériau résistant à la chaleur et/ou au froid et aux hydrocarbures, de longueur L supérieure à I de sorte à ménager une portion débordante d'enveloppe de chaque côté de cette chaussette, cette portion ayant une longueur X = (L-I)/2, cette enveloppe étant montée de façon coaxiale à ladite chaussette.

De plus, chaque portion débordante de ce manchon comporte une zone de repli au droit de l'extrémité de la chaussette de sorte à permettre la superposition par repli de cette portion sur la chaussette et sur l'enveloppe.

Selon un mode de réalisation, la portion comporte une zone dite de serrage, délimitée par deux joncs.

Selon un perfectionnement, au moins chaque portion débordante de l'enveloppe est de plus forte épaisseur vers l'intérieur, le diamètre extérieur restant constant, cette surépaisseur se prolongeant sur une longueur Y, sous la chaussette, en superposition.

Selon un mode de réalisation, dans le cas d'une application à la liaison entre une canalisation de réservoir de carburant et ledit réservoir, l'ensemble de la chaussette et de l'enveloppe porte un repli d'allongement en plus de sa capacité propre de dilatation.

Dans le cas d'une application aux liaisons entre organes du moteur avec un fluide haute pression, haute température, cette enveloppe peut être réalisée par moulage en un matériau élastomère fluoré pour les plus hautes températures près de 200°C et en un matériau éthylène acrylique pour les températures un peu plus basses de 150°C.

La chaussette est réalisée à partir de fils tissés ou tricotés dont la nature est liée aux nécessités techniques, le choix allant du coton à l'aramide en passant par le polyester.

La chaussette tissée ou tricotée, comporte selon un autre perfectionnement un bordé formant un fin bourrelet de façon à améliorer la capacité de rétention de la chaussette lors du montage.

Il peut aussi être prévu deux colliers de serrage, disposés chacun sur la zone de serrage correspondante entre les joncs, ces colliers étant de préférence des colliers à réserve élastique.

De façon avantageuse, l'invention prévoit également des moyens d'immobilisation en rotation du collier.

La présente invention est maintenant décrite en détail suivant un mode de réalisation particulier, non limitatif, en regard des dessins annexés qui représentent:
- figure 1 : une vue en perspective d'un manchon isolé selon l'invention avant montage,
- figure 2 : une vue en coupe longitudinale, médiane, du manchon selon l'invention, avant montage,
- figure 3 : une vue en coupe longitudinale, médiane, du même manchon que celui de la figure 2, l'une des extrémités étant équipée prête au montage sur une tubulure, et
- figures 4A et 4B : une vue d'un manchon selon la présente invention, respectivement avant allongement et après allongement suite à un choc.

Le procédé selon l'invention se caractérise en ce qu'il comprend les étapes suivantes :
- préparer une chaussette d'une longueur I, à partir d'un matériau résistant au moins mécaniquement,
- introduire dans ladite chaussette une enveloppe tubulaire souple en un matériau résistant à la chaleur et/ou au froid et aux hydrocarbures, ladite enveloppe étant sous forme pliée par rapport à son axe longitudinal, d'une longueur L supérieure à I de sorte à ménager une portion débordante d'enveloppe de chaque côté de cette chaussette, cette portion ayant une longueur X = (L-I)/2, et
- laisser l'enveloppe reprendre sa forme tubulaire initiale, les diamètres intérieur de la chaussette et extérieur de l'enveloppe en forme étant sensiblement identiques de sorte que la surface extérieure de l'enveloppe vienne au contact de la surface intérieure de la chaussette.

La description qui va suivre est établie relativement à un premier mode de réalisation d'un manchon destiné à relier des organes d'un moteur de véhicule, notamment destiné à véhiculer un fluide haute pression, haute température.

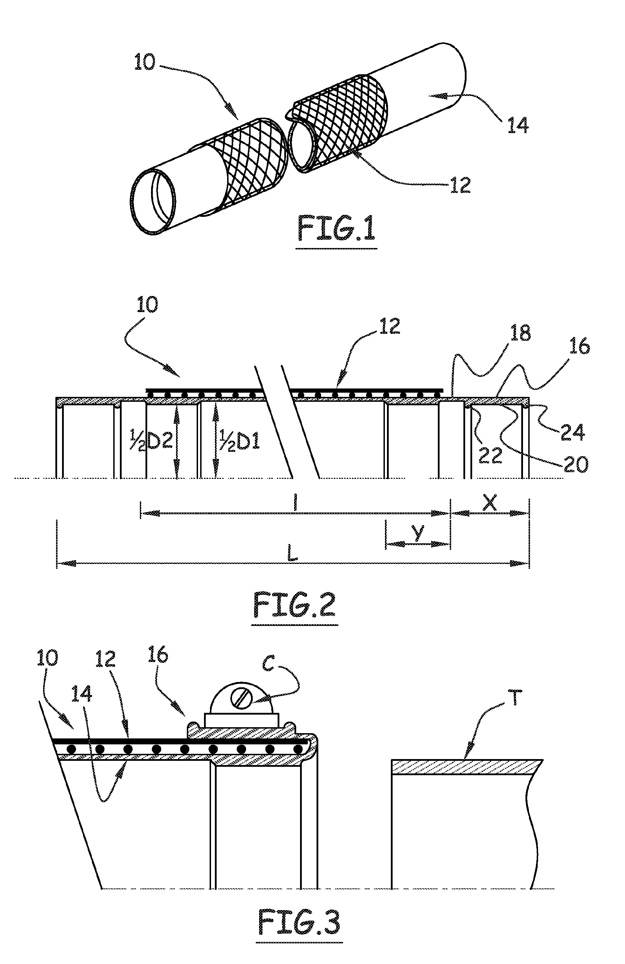

Le manchon selon l'invention ainsi obtenu par la mise en oeuvre du procédé est maintenant décrit en regard des figures 1, 2 et 3 pour l'application haute température, haute pression.

Sur la figure 1, on trouve un manchon 10 comprenant une chaussette 12 destinée à contenir mécaniquement la pression et à résister à la température du fluide circulant et une enveloppe 14 tubulaire, interne destinée à conduire le fluide sous pression, résistante chimiquement aux carburants et résistante en température au fluide circulant, ladite chaussette et ladite enveloppe étant disposées de façon coaxiale.

La chaussette 12 est réalisée dans ce premier mode de réalisation par tissage ou tricotage d'au moins un fil en un matériau présentant des propriétés de résistance mécanique pour l'essentiel et en température. On peut citer une chaussette réalisée en fils de coton, aramide au polyester. La résistance mécanique doit être suffisante pour contenir une pression maximale de 4 à 5 bars pour donner un ordre d'idées. L'homme de l'art peut jouer sur la nature des fils mais aussi sur le diamètre, la densité du tissage ou du tricotage ou encore le type de tissage ou de tricotage.

De même, le matériau utilisé doit pouvoir résister à une gamme de températures de l'ordre de -60 à +300°C.

Sur les dessins concernés, la longueur de cette chaussette est référencée I.

L'enveloppe 14 tubulaire, disposée à l'intérieur de la chaussette, est réalisée par exemple, dans le cas des moteurs de véhicules, en un matériau élastomère fluoré dit FPM ou un fluorosilicone dit FVMQ pour les plus hautes températures, près de 200°C.

Pour les températures un peu plus basses de 150°C, on peut recourir à des matériaux éthylène acrylique dits AEM.

Cet élastomère constituant l'enveloppe est souple et peut être plié suivant son axe longitudinal pour diminuer son diamètre apparent et faciliter son introduction dans la chaussette.

L'épaisseur de cette enveloppe est de l'ordre de quelques dixièmes de millimètres pour fixer un ordre d'idées.

Cet élastomère doit être résistant chimiquement au fluide circulant, étanche aux hydrocarbures dans le cas des moteurs de véhicules mais ne présente pas de capacités de résistance mécanique en rapport avec les pressions auxquelles cette enveloppe tubulaire est soumise, surtout dans les épaisseurs utilisées.

La longueur de cette enveloppe est référencée L. Le différentiel de longueur par rapport à la longueur de la chaussette soit L-I est réparti de façon symétrique de part et d'autre de ladite chaussette, laissant ainsi dépasser de part et d'autre une portion 16 d'enveloppe de longueur X = (L-I) / 2.

Selon un mode de réalisation particulier complémentaire, chaque portion 16 de l'enveloppe 14 est de plus forte épaisseur vers l'intérieur, le diamètre extérieur restant constant. Cette surépaisseur se prolonge sur une longueur Y, sous la chaussette, en superposition.

Comme cela est plus visible sur la figure 2, chaque portion 16 comporte une zone 18 de repli, en l'occurrence amincie. Cette zone peut simplement consister en une interruption de la surépaisseur.

Il est également prévu une zone 20 dite de serrage, délimitée par deux joncs 22 et 24 faisant saillie vers l'intérieur avant montage du manchon, comme montré sur la figure 2.

La mise en service de ce manchon s'effectue de la manière décrite ci-après essentiellement en regard de la figure 3, suivant un premier mode de mise en service.

Chaque portion 16 de l'enveloppe est repliée sur elle-même de façon à superposer la longueur X sur la longueur Y.

On constate que la zone 18 de repli, amincie, facilite ce repli sur elle-même de l'extrémité. L'élasticité de la matière de l'enveloppe 14 provoque alors un premier serrage qui assure le plaquage de la portion 16 sur la partie Y, tout en enserrant l'extrémité de la chaussette 12 sur une longueur sensiblement égale à Y.

La zone 20 de serrage se trouve superposée à l'extrémité de la chaussette et à la zone Y complémentaire de surépaisseur.

Le diamètre D2 de l'ouverture du manchon ainsi agencé est inférieur au diamètre D1 interne de l'enveloppe dans sa zone centrale.

Aussi, lors du montage du manchon 10, l'engagement de l'extrémité du manchon sur une tubulure T par exemple s'effectue de façon élastique et assure un pré-positionnement. Le repli présente lui-même un intérêt car la zone 18 amincie ainsi repliée génère une sorte de chanfrein, facilitant le centrage et l'introduction.

De façon connue, un collier C assure un serrage radial de l'ensemble sur ladite tubulure. Par contre, dans le cas du manchon selon l'invention, le collier C est placé sur la zone 20 de serrage entre les deux joncs 22 et 24.

Selon un autre mode de mise en oeuvre, le collier peut aussi être positionné préalablement à l'engagement du manchon sur la tubulure T. Les colliers sont de fait pré-montés et les manchons peuvent être livrés prêts à la pose, équipés de leurs colliers.

Selon un perfectionnement, chaque collier peut aussi être positionné en orientation circulaire par des moyens d'immobilisation en rotation. Les moyens peuvent par exemple prendre la forme de lèvres surmoulées ou d'entailles ménagées dans la masse, formant un pontage.

De façon préférentielle, les colliers sont de type à réserve élastique, ce qui contribue encore mieux à les conserver parfaitement positionnés au droit de leur zone respective de serrage, entre les deux joncs 22 et 24.

Dans le cas de la présence de colliers, la manipulation est encore facilitée car les colliers constituent un moyen de préhension et d'entraînement du manchon.

En effet, une fois le manchon 10 parfaitement positionné sur ses deux tubulures T, il suffit de serrer chaque collier, généralement par vissage, pour assurer un parfait assujettissement du manchon 10 sur ces tubulures T.

Un tel manchon présente les avantages recherchés de simplicité de constitution et de fabrication puisqu'il n'est besoin que de deux pièces, la chaussette 12 et l'enveloppe 14 ainsi que les colliers éventuellement qui bien qu'étant des articles disponibles dans le commerce permettent de disposer d'un produit prêt au montage.

L'enveloppe peut être fabriquée par moulage de l'élastomère retenu avec une faible quantité de matière tout en obtenant l'effet barrière recherché. Ce moulage est une opération simple pour des manchons rectilignes ou sensiblement rectilignes ou encore avec des ondes.

La chaussette est avantageusement fabriquée en continu et peut être débitée à la longueur puisque dans le cas d'un tissage ou d'un tricotage il est possible de tronçonner le produit continu en longueurs unitaires sans que la structure se dégrade.

Avantageusement, il est possible de fabriquer les chaussettes unitairement par machine avec une finition en extrémité avec un bordé pour éviter toute amorce de dégradation. Dans ce cas, la finition du bordé peut même générer un fin bourrelet qui améliore encore la capacité de rétention de la chaussette lors du montage, ce bourrelet étant immobilisé par le collier après serrage.

Selon un perfectionnement de l' invention, il est possible de réaliser un manchon comme dans l'invention avec des ondes pour augmenter les capacités de déformation ou de compensation.

Dans ce cas, l'enveloppe est moulée avec des ondulations, au moins sur une zone, ceci de façon connue.

Quant à la chaussette, il en est de même, lors du tissage ou du tricotage, il est aussi possible de générer des ondulations de profil conjugué pour disposer d'une superposition de la chaussette et de l'enveloppe au moins sur toute la zone concernée, ce que l'art antérieur connu ne propose pas.

Dans le cas d'une application à un manchon de liaison d'une tubulure de réservoir de carburant audit réservoir, l'enveloppe doit résister aux hydrocarbures, au chaud et/ou au froid, même si les valeurs ne sont pas aussi élevées que dans le cas d'organes du moteur. Pour donner un ordre de grandeur, la pression est de l'ordre de 0,4 bars et la température de 70°C maximum.

Les constructeurs de véhicules et les normes imposent des contraintes supplémentaires.

En effet, il faut que le manchon puisse supporter un allongement important de plusieurs dizaines de millimètres, notamment en cas de choc.

Il faut donc une résistance mécanique comme précédemment, une résistance impérative aux hydrocarbures, des capacités de dilatation mais aussi une capacité d'allongement en cas de choc. On sait aussi que le réservoir et ses liaisons sont protégés, ce qui généralement a pour corollaire une accessibilité limitée.

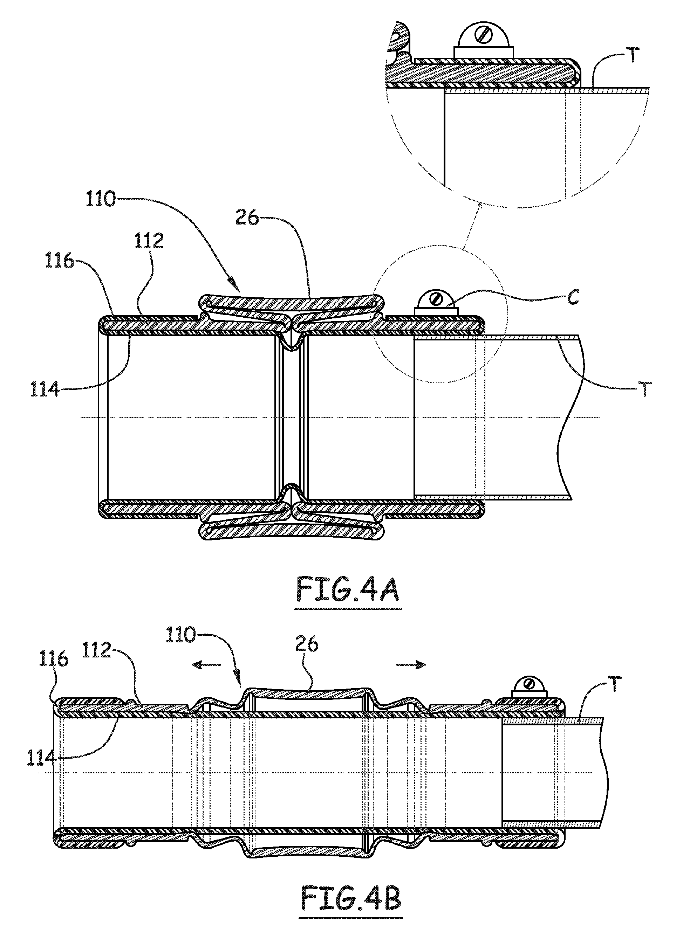

Un mode de réalisation à capacité d'allongement est représenté sur les figures 4A et 4B.

On y retrouve la structure proposée, obtenue par le procédé selon l'invention comme dans le premier mode de réalisation. Les références des éléments identiques portent les mêmes références que sur les figures 1, 2 et 3, augmentées de 100.

Les matériaux peuvent être différents pour présenter les caractéristiques adaptées à cette application. Ainsi la chaussette 112 est par exemple en NBR, nitrile butadiène rubber, ou en polychloroprène de façon à présenter la déformabilité et la résistance mécanique souhaitées pour assurer la traction sans céder et l'enveloppe 116 est par exemple en FPM de façon à garantir une étanchéité et une résistance de très longue durée aux hydrocarbures ainsi que la souplesse nécessaire.

De plus, la chaussette 112 comporte un repli 26 de section longitudinale sensiblement triangulaire, ceci sur toute sa périphérie.

Ce repli autorise un allongement sur une grande longueur, quasi instantané, au-delà d'un certain seuil de traction de ladite chaussette.

Quant à l'enveloppe 114, le matériau élastomère qui la constitue ainsi que sa minceur autorisent le même allongement que celui de la chaussette. Le profil de cette enveloppe reste cylindrique une fois déformée comme montré sur la figure 4B.

Dans le cas où le matériau ne présenterait pas les capacités d'extensibilité suffisante, il suffit de prévoir un repli tout comme le repli 26 également ménagé sur l'enveloppe.

A noter l'extrême sécurité car dans le cas où l'allongement provoquerait la rupture de l'enveloppe, le carburant est toujours confiné dans la chaussette. Par contre si le véhicule a subi un tel choc au niveau de cette liaison protégée, susceptible de provoquer une rupture, il est devenu inutilisable.

L'avantage dans ce cas est aussi de limiter la quantité de matière nécessaire pour l'enveloppe sachant que le matériau adapté pour un tel usage est coûteux.

## Revendications

1. Procédé de réalisation d'un manchon (10,110) de liaison, pour les liaisons de fluides, notamment utilisé dans le domaine des véhicules et plus particulièrement entre un moteur et un turbocompresseur et/ou entre un moteur et un refroidisseur ou encore entre une canalisation de réservoir et un réservoir de carburant, **caractérisé en ce qu'**il comprend les étapes suivantes :
- préparer une chaussette (12,112) d'une longueur I, à partir d'un matériau résistant au moins mécaniquement,
- introduire dans ladite chaussette une enveloppe (14,114) tubulaire souple en un matériau résistant à la chaleur et/ou au froid et aux hydrocarbures, ladite enveloppe étant sous forme pliée par rapport à son axe longitudinal, d'une longueur L supérieure à I de sorte à ménager une portion débordante d'enveloppe de chaque côté de cette chaussette, cette portion ayant une longueur X = (L-I)/2 et
- laisser l'enveloppe reprendre sa forme tubulaire initiale, les diamètres intérieur de la chaussette et extérieur de l'enveloppe en forme étant sensiblement identiques de sorte que la surface extérieure de l'enveloppe vienne au contact de la surface intérieure de la chaussette.

2. Manchon (10,110) obtenu par la mise en oeuvre du procédé selon la revendication 1, **caractérisé en ce qu'**il comprend :
- une chaussette (12) d'une longueur I, réalisée à partir d'un matériau résistant mécaniquement, et
- une enveloppe (14) tubulaire souple en un matériau résistant à la chaleur et/ou au froid ainsi qu'aux hydrocarbures, de longueur L supérieure à I de sorte à ménager une portion (16) débordante d'enveloppe de chaque côté de cette chaussette, cette portion (16) ayant une longueur X = (L-I)/2, cette enveloppe étant montée de façon coaxiale à ladite chaussette.

3. Manchon (10) selon la revendication 2, **caractérisé en ce que,** pour une application à des fluides haute température et/ou haute pression, la chaussette (12) est réalisée à partir de fils résistant mécaniquement et à la chaleur, tissés ou tricotés, et l'enveloppe (14) tubulaire souple est en un matériau résistant à la chaleur et au froid ainsi qu'aux hydrocarbures.

4. Manchon (110) selon la revendication 2, **caractérisé en ce que**, pour une application à une liaison entre une canalisation de réservoir de carburant et ledit réservoir, la chaussette (112) est réalisée à partir d'un matériau résistant mécaniquement et l'enveloppe (114) tubulaire souple est en un matériau résistant à la chaleur et au froid ainsi qu'aux hydrocarbures.

5. Manchon (10,110) selon l'une des revendications 2, 3 ou 4, **caractérisé en ce que** chaque portion (16,116) débordante comporte une zone (18,118) de repli au droit de l'extrémité de la chaussette (12,112) de sorte à permettre la superposition par repli de cette portion (16,116) sur la chaussette (12,112) et sur l'enveloppe (14,114).

6. Manchon (10,110) selon la revendication 5, **caractérisé en ce que** la portion (16,116) comporte une zone (20,120) dite de serrage.

7. Manchon (10,110) selon l'une des revendications 2 à 6, **caractérisé en ce que** chaque portion (16,116) de l'enveloppe (14,114) est de plus forte épaisseur vers l'intérieur, le diamètre extérieur restant constant, cette surépaisseur se prolongeant sur une longueur Y, sous la chaussette, en superposition.

8. Manchon (10) selon l'une des revendications 2, 3, 5 à 7, **caractérisé en ce que** l'enveloppe (14) est réalisée par moulage en un matériau élastomère fluoré pour les plus hautes températures près de 200°C et un élastomère éthylène acrylique pour les températures un peu plus basses de 150°C.

9. Manchon (10) selon l'une des revendications 2,3, 5 à 8, **caractérisé en ce que** la chaussette (12) tissée ou tricotée, comporte un bordé formant un fin bourrelet de façon à améliorer la capacité de rétention de la chaussette lors du montage.

10. Manchon (10, 110) selon l'une des revendications 2 à 9, **caractérisé en ce qu'**il comprend deux colliers de serrage, disposés chacun sur la zone (20, 120) de serrage.
